# EUROPÄISCHE PATENTSCHRIFT

(11) **EP 4 370 297 B1**
(45) Veröffentlichungstag und Bekanntmachung des Hinweises auf die Patenterteilung: **14.05.2025**
(21) Anmeldenummer: 22741471.1
(22) Anmeldetag: 29.06.2022
(51) Int. Cl.: B29B 7/60, B29B 7/72, B29B 7/74, G01F 1/74, G01N 7/14, B29C 44/20, G01N 21/64, G01N 21/84

(54) **VORRICHTUNG ZUR BEREITSTELLUNG EINER FLÜSSIGEN POLYMERKOMPONENTE MIT EINEM VORGEGEBENEN LUFTGEHALT, INSBESONDERE FÜR DIE HERSTELLUNG EINES KUNSTSTOFFSCHAUMS**
APPARATUS FOR PROVIDING A LIQUID POLYMER COMPONENT WITH A PREDEFINED AIR CONTENT, IN PARTICULAR FOR PRODUCING A PLASTIC FOAM
APPAREIL POUR FOURNIR UN COMPOSANT POLYMÈRE LIQUIDE AVEC UNE TENEUR EN AIR PRÉDÉFINIE, EN PARTICULIER POUR LA PRODUCTION D'UNE MOUSSE PLASTIQUE

(30) Priorität: 12.07.2021 DE 102021117879
(43) Veröffentlichungstag der Anmeldung: 22.05.2024
(73) Patentinhaber: Hilger u. Kern GmbH, 68167 Mannheim (DE)
(72) Erfinder: KESSLER, Alexander, 68623 Lampertheim (DE)
(74) Vertreter: Kesselhut, Wolf
(86) Internationale Anmeldenummer: PCT/EP2022/067862
(87) Internationale Veröffentlichungsnummer: WO 2023/285143

(56) Entgegenhaltungen:
- EP-A1- 0 516 904
- EP-A2- 0 451 752
- DE-A1- 102005 047 906
- DE-A1- 3 244 037
- DE-A1- 3 317 486
- DE-U1- 202018 104 456
- DE-U1- 29 712 263

## Beschreibung

Die Erfindung betrifft eine Vorrichtung zur Bereitstellung einer flüssigen Polymerkomponente mit einem vorgegebenen Luftgehalt, insbesondere für die Herstellung eines Kunststoffschaums, gemäß dem Oberbegriff von Anspruch 1.

Bei der Herstellung von dauerelastischen Kunststoffschäumen, die durch Mischen von zwei einzelnen Komponenten wie z.B. Polyol und Isocyanat in einer Mischvorrichtung bereitgestellt, und vor dem Ausreagieren zur Erstellung einer Dichtung unmittelbar auf die zu dichtenden Bauteile, wie Deckel oder Rahmenteile appliziert werden, ist es erforderlich, eine der beiden flüssigen Polymerkomponenten - in der Regel Polyol - mit einer wohl definierten Menge an Luft zu beladen, um im Endprodukt eine gewünschte Schaumkonsistenz zu erhalten.

Hierbei ergibt sich das Problem, dass die flüssigen Polymerkomponenten während des Mischvorgangs in der Regel in großen Behältern bereit gestellt werden, was dazu führt, dass die Luftkonzentration in der flüssigen Polymerkomponente abfällt, wenn diese in den Vorratsbehälter nachgefüllt wird. Da das Vermischen der eingeleiteten Luft mit der Flüssigkeit bis zur vollständigen Sättigung in der Regel eine gewisse Zeit, z.B. 30 min benötigt, ändert sich die Schaumqualität während dieser Zeit ständig. Demgemäß ist es wünschenswert, den aktuellen Luftgehalt in der flüssigen Polymerkomponente zu ermitteln, um diesen bei Bedarf entsprechend erhöhen oder verringern zu können, um den gewünschten Luftgehalt innerhalb möglichst kurzer Zeit auf einen möglichst konstanten Wert einzustellen.

In diesem Zusammenhang ist es zur Bestimmung des Luftgehalts in der flüssigen Polymerkomponente eines Schaumsystems aus der EP 098 04 280 A1 und der EP 0 451 752 A2 bekannt, Messzylinder mit Messkolben einzusetzen, in die eine definierte Menge der mit Luft beladenen, aus dem Vorratsbehälter entnommenen Polymerkomponente in vorgegebenen Zeitintervallen eingeleitet wird.

Im abgeschlossenen Raum des Messzylinders wird der Gasgehalt in der entnommenen Probe nach der Entnahme aus dem Vorratsbehälter mittels Kompression und/oder Dekompression ermittelt. Das in der EP 98 04 280 beschriebene Verfahren und die zugehörige Vorrichtung besitzen die Unzulänglichkeit, dass der Luftgehalt der flüssigen Polymerkomponente nicht kontinuierlich, sondern nur chargenweise bestimmt werden kann. Zudem nimmt die Kompression und Dekompression der entnommenen Probe vergleichsweise viel Zeit in Anspruch, wodurch die Ungenauigkeit zwischen dem ermittelten Luftgehalt in der Probe und dem tatsächlichen Luftgehalt der flüssigen Polymerkomponente im Vorratsbehälter aufgrund des Zeitversatzes und des nicht linearen Sättigungsverhaltens der Luft in der flüssigen Polymerkomponente zusätzlich vergrößert wird.

Weitere Vorrichtungen zum Messen der Gasbeladung von flüssigen Kunststoffkomponenten sind aus der EP 0 516 904 A1, DE 32 44 037 A1 und DE 297 12 263 U1 bekannt, bei denen die Bestimmung der Gasbeladung ebenfalls mit Hilfe von Meßzylindern erfolgt.

Schließlich beschreibt die DE 20 2018 104 456 U1 einen Autoklaven mit einer Reaktionskammer zum Auslösen und/oder Fördern von chemischen oder physikalischen Druckreaktionen, bei welchem der Sauerstoffgehalt in der Reaktionskammer durch einen Sauerstoffsensor erfasst wird, um auf Basis des erfassten Sauerstoffgehalts die Reaktionskammer zu spülen.

Demgemäß ist es eine Aufgabe der vorliegenden Erfindung, eine Vorrichtung zur Bereitstellung einer flüssigen, mit Luft versetzten Polymerkomponente zu schaffen, deren Luftanteil fortlaufend erfasst und in kurzer Zeit auf einen gewünschten Vorgabewert eingestellt werden kann.

Diese Aufgabe wird erfindungsgemäß durch eine Vorrichtung mit den Merkmalen von Anspruch 1 gelöst.

Weitere Merkmale der Erfindung sind in den Unteransprüchen beschrieben.

Gemäß der Erfindung umfasst eine Vorrichtung zur Bereitstellung einer flüssigen Polymerkomponente mit einem vorgegebenen Luftgehalt, wie sie insbesondere für die Herstellung eines Kunststoffschaums verwendet wird, einen Druckbehälter, welchem die flüssige Polymerkomponente über eine Öffnung zugeführt wird. Die Zufuhr erfolgt dabei in Abhängigkeit vom Füllstand oder in vorgegebenen Zeitintervallen diskontinuierlich, z.B. alle 30 min oder einmal am Tag.

Die Vorrichtung umfasst weiterhin eine am Boden des Druckbehälters angeordnete Rohrleitung, die bevorzugt als Rohrschnecke ausgeführt ist, welche eine Vielzahl von Luftaustrittsdüsen aufweist, denen Luft aus einer außerhalb des Druckbehälters 4 angeordneten Druckluftquelle mit einem vorgegebenen Überdruck zugeführt wird, die aus den Luftaustrittsdüsen in den Innenraum des Druckbehälters austritt und in der flüssigen Polymerkomponente physikalisch gelöst wird.

Die Vorrichtung weist weiterhin eine motorisch, insbesondere auch drehzahlvariabel angetriebene Rühreinrichtung auf, die die flüssige Polymerkomponente mit der aus den Luftaustrittsdüsen austretenden Luft vermischt, so dass sich diese in der flüssigen Polymerkomponente physikalisch löst. Hierdurch erhöht sich der Anteil der Luft in der flüssigen Polymerkomponente nach der Zufuhr der unbeladenen flüssigen Polymerkomponente zunehmend, wobei die maximal erzielbare Sättigung, bzw. deren Zunahme pro Zeiteinheit variiert und vom Luftdruck im Druckbehälter, den chemischen Eigenschaften der Polymerkomponente, sowie auch der Temperatur abhängt. Die in der flüssigen ersten Polymerkomponenten gelöste Luft bildet beim, bzw. nach dem Vermischen der Polymerkomponente mit der weiteren flüssigen Polymerkomponente Kerne für Luftblasen, welche im ausgehärteten 2-Komponenten Kunststoffschaum die in sich geschlossenen Hohlräume formen, welche die dauerelastischen Eigenschaften sowie auch die Porengröße und Kompressibilität des Kunststoffschaums beeinflussen.

Die erfindungsgemäße Vorrichtung zeichnet sich dadurch aus, dass in der Zirkulationsleitung ein Sauerstoffsensor angeordnet ist, der einen Istwert für die Sauerstoffsättigung der mit Luft beladenen Polymerkomponente erfasst. Die Vorrichtung umfasst weiterhin eine elektronische Steuerungs- und Regelungseinrichtung, die dazu eingerichtet ist, in Abhängigkeit von dem vom Sauerstoffsensor erfassten Istwert für die Sauerstoffsättigung in der Zirkulationsleitung den Druck und/oder die Menge der den Luftaustrittsdüsen zugeführten Druckluft in der Weise zu verändern dass die Sauerstoffsättigung der in der Zirkulationsleitung zirkulierten flüssigen Polymerkomponente einen vorgegebenen Sollwert annimmt, bzw. sich einem solchen vorgegebenen Sollwert annähert. Aus der Sauerstoffsättigung lässt sich gewünschten Falls der Sauerstoffpartialdruck in der flüssigen Polymerkomponente rechnerisch bestimmen, falls dieser für weitere Anwendungen benötigt wird.

Als Sauerstoffsensor wird bevorzugt ein Sensor eingesetzt, der nach dem Lumineszensverfahren arbeitet. Derartige Sensoren sind beispielsweise aus der EP 2 461 154 bekannt. Der Sauerstoffsensor 100 wird bevorzugt mit Hilfe eines Adapters in der Zirkulationsleitung montiert und kann dadurch im laufenden Betrieb sozusagen "inline" und permanent die Menge des gebundenen Sauerstoffs im Polymer erfassen. Der Sauerstoffsensor besitzt als Kontaktfläche zum Polymer eine photosensitive Membran. Ein im Sensor, bzw. der Membran befindlicher Luminophor wird angeregt und emittiert daraufhin Licht (Fluoreszenz). Strömt nun Sauerstoff an dem Sensor vorbei, wird die Emission des Luminophors anteilig zu der vor dem Sensor befindlichen Sauerstoffmenge verringert, was auch als Lösch-Effekt oder Quenching-Effekt bezeichnet wird. Bevorzugt in Abhängigkeit von der Änderung der Luminophor-Emission errechnet eine Software in der elektronischen Steuerungs- und Regelungseinrichtung dann den Sauerstoffgehalt in der flüssigen Polymerkomponente im Bereich hinter der fotosensitiven Membran. Der Sauerstoffgehalt wird bevorzugt in einen Wert für die gebundene Luftmenge im Polymer umgerechnet. Mit diesem Wert für die gebundene Luftmenge im Polymer wird dann im Anschluss daran die weitere Luftbeladung der flüssigen Polymerkomponenten im Druckbehälter, der gleichzeitig der Vorratsbehälter für die flüssige Polymerkomponente ist, durch Verändern der Zufuhrdauer und/oder der Größe des Drucks der Luft geregelt, die von außen her in die im Druckbehälter angeordnete Rohrleitung zugeführt wird.

Wie von der Anmelderin erkannt wurde, beruht der Grundgedanke der Erfindung vereinfacht ausgedrückt darauf, den physikalisch gebundenen Sauerstoffgehalt in dem flüssigen Polymer fortlaufend, bzw. in vorgegebenen Zeitintervallen zu messen, und anhand von diesem den Gehalt der gebundenen Luft im Polymer zu ermitteln. Mithilfe der vom Sauerstoffsensor erfassten Menge an gebundener Luft im Polymer wird im Anschluss daran die Luftbeladung des Polymers geregelt, indem der Druck im Druckbehälter erhöht und/oder die pro Zeiteinheit in den Behälter hinein zugeführte Menge an Luft verändert wird, um dadurch ein bevorzugt konstantes Verhältnis von Polymer zu Luft zu erhalten, welches wiederum maßgeblich für eine konstante Qualität des polymeren Schaumgemischs nach dem Vermischen der beiden Polymerkomponenten ist.

Die Erfindung wird nachfolgend mit Bezug auf die Zeichnungen anhand einer bevorzugten Ausführungsform beschrieben. In den Zeichnungen zeigen:
- Fig. 1: eine schematische Übersichtsdarstellung der erfindungsgemäßen Vorrichtung, und
- Fig. 2: eine schematische ausschnittsweise Darstellung der Zirkulationsleitung mit dem daran angeordneten Sauerstoffsensor.

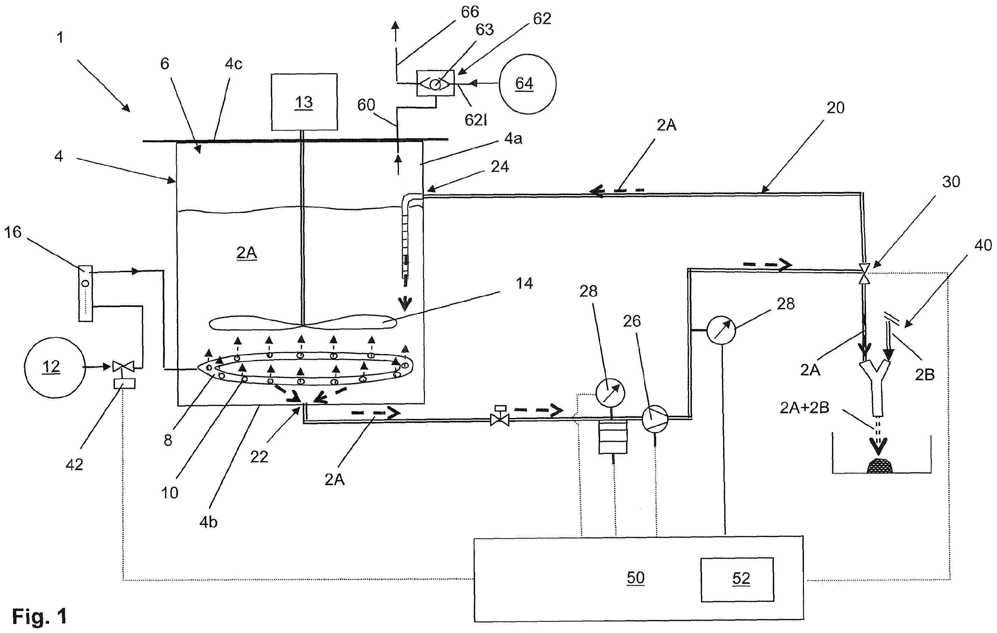

Wie in Fig. 1 gezeigt ist, umfasst eine Vorrichtung 1 zur Bereitstellung einer flüssigen ersten Polymerkomponente 2A mit einem vorgegebenen Luftgehalt einen Druckbehälter 4, welchem die flüssige Polymerkomponente 2A z.B. über eine durch den Deckel 4c des Druckbehälters 4 verschlossene Öffnung 6 oder eine nicht gezeigte Öffnung in der Behälterwand 4a zugeführt wird.

Wie in Fig. 1 gezeigt ist, ist im Bereich des Bodens 4b des Druckbehälters 4 eine Rohrleitung 8 angeordnet, welche eine Vielzahl von Luftaustrittsdüsen 10 aufweist, denen Luft aus einer außerhalb des Druckbehälters 4 angeordneten Druckluftquelle 12, z.B. einem Druckluftkompressor, mit einem vorgegebenen Überdruck zugeführt wird. Diese strömt aus den Luftaustrittsdüsen 10 aus und wird in der im Innenraum des Druckbehälters 4 bevorrateten ersten Polymerkomponenten 2A physikalisch gelöst.

Die Vorrichtung 1 weist weiterhin eine durch einen Motor 13 angetriebene Rühreinrichtung 14 auf, die in Fig. 1 durch einen schematischen Rotor angedeutet ist, und die die flüssige Polymerkomponente 2A mit der aus den Luftaustrittsdüsen 10 austretenden Druckluft vermischt, so dass sich diese in der flüssigen Polymerkomponente 2A physikalisch löst und deren Luftanteil, welcher beim Vermischen der Polymerkomponente mit einer weiteren flüssigen Polymerkomponente 2B Kerne für Luftblasen bildet, sich dementsprechend fortlaufend erhöht.

Wie der Darstellung der Fig. 1 weiterhin entnommen werden kann, ist der Innenraum des Druckbehälters 4 über einen im Bereich des Bodens 4b des Druckbehälters 4 angeordneten Zulauf 22 strömungsmäßig mit einer Zirkulationsleitung 20 verbunden, durch die die flüssige Polymerkomponente 2A mittels einer Pumpe 26 zurück zu einem Ablauf 24 zirkuliert wird, der sich oberhalb des Zulaufs 22 befindet. Wie dargestellt, umfasst der Ablauf 24 bevorzugt einen sich von der nicht näher bezeichneten Durchtrittsöffnung in der Behälterwand 4a in Abwärtsrichtung erstreckenden vertikalen Rohrabschnitt, der sich bevorzugt unterhalb der Flüssigkeitsoberfläche der flüssigen Polymerkomponente 2A befindet. Hierdurch wird sichergestellt, dass die über den Ablauf 24 in den Druckbehälter 4 zurück zirkulierte Flüssigkeit 2A entgegen der aus den Luftaustrittsdüsen 10 aufsteigenden Luftmenge strömt (Gegenstromprinzip), wodurch die Beladung der flüssigen Polymerkomponente 2A mit Luft in vorteilhafter Weise verbessert wird.

Zwischen der Pumpe 26 und dem Ablauf 24 ist ein bekanntes Auslassventil 30 angeordnet, über das die mit Luft beladene flüssige Polymerkomponente 2A einer bekannten Mischeinrichtung 40 zugeführt werden kann, um die erste flüssige Polymerkomponente 2A mit der weiteren flüssigen Polymerkomponente 2B in bekannter Weise in einer symbolisch durch eine Y-Leitung angedeutete Mischeinrichtung 40 zu vermischen. Bevorzugt werden die miteinander vermischten Polymerkomponenten 2A, 2B, die als flüssiger ungehärteter Kunststoffschaum 2A + 2B aus der Mischeinrichtung 40 austreten, unmittelbar als Raupe fortlaufend auf ein Bauteil, wie einen Deckel oder eine Tür, aufgetragen, auf welchem das Kunststoffschaumgemisch nach dem Aushärten beispielsweise eine entsprechende dauerelastische Dichtung bildet. Die erste flüssige Polymerkomponente 2A, die in der erfindungsgemäßen Vorrichtung 1 mit einer vorgegebenen Menge an Luft zur Kernbildung beladen wird, kann beispielsweise Polyol sein, und die zweite Polymerkomponente 2B ist in diesem Falle Isocyanat.

In der Zirkulationsleitung 20 ist ein Sauerstoffsensor 100 angeordnet, der einen Istwert für die Sauerstoffsättigung der mit Luft beladenen Polymerkomponente 2A bevorzugt fortlaufend erfasst. Die Vorrichtung 1 umfasst weiterhin eine elektronische Steuerungs- und Regelungseinrichtung 50, die über nicht näher bezeichnete Leitungen mit dem Sauerstoffsensor 100, sowie auch der Pumpe 26, welche bevorzugt eine Dosierpumpe ist, und einem Auf-/Zu-Ventil 42 verbunden ist, über welches in Abhängigkeit von dem vom Sauerstoffsensor 100 erfassten Istwert für die Sauerstoffsättigung in der Zirkulationsleitung 20 der Druck und/oder die Menge der den Luftaustrittsdüsen 10 aus der Druckluftquelle 12 zugeführten Druckluft veränderbar ist. Der Druck und/oder die Menge der den Luftaustrittsdüsen zugeführten Druckluft wird hierzu derart erhöht, bzw. erniedrige, dass die Sauerstoffsättigung in der in der Zirkulationsleitung 20 zirkulierten flüssigen Polymerkomponente 2A einen vorgegebenen Sollwert annimmt, bzw. sich einem solchen vorgegebenen Sollwert annähert.

Bei einer Ausführungsform der Erfindung wird das zuvor erwähnte Auf-/Zu-Ventil 42 durch die elektronische Steuerungs- und Regelungseinrichtung 50 für eine vorgegebene Zeitdauer, z.B. für 5 min, geöffnet und wieder geschlossen, deren Länge z.B. um 10 % oder einen festen Zeitwert, z.B. 10 Sekunden, vergrößert wird, wenn der vom Sauerstoffsensor 100 erfasste Istwert für die Sauerstoffsättigung kleiner ist als der bevorzugt empirisch ermittelte Sollwert. Durch das Öffnen des Auf-/Zu-Ventils 42 strömt komprimierte Luft bevorzugt über einen Durchflussmesser 16 aus der Druckluftquelle 12 in die Rohrleitung 8 ein, und tritt durch die Luftaustrittsdüsen 10 in die flüssige Polymerkomponente 2A ein, in der ein Teil der Luft in Abhängigkeit vom Druck innerhalb des Druckbehälters 4, dem aktuellem Sättigungsgrad und der Temperatur in der flüssigen Polymerkomponente physikalisch gelöst wird. Der Teil der zugeführten Luft, die nicht gelöst wird, steigt auf und tritt über einen Luftaustrittskanal 60 an der Oberseite des Druckbehälters 4 aus, der über ein Druckregulierventil verschließbar ist.

In entsprechend umgekehrter Weise wird die Zeitdauer, in der Druckluft aus der Druckluftquelle 12 durch das Auf-/Zu-Ventil in den Druckbehälter 4 strömt, und damit die Menge an zugeführte Luft, durch die elektronische Steuerungs- und Regelungseinrichtung 50 verkürzt, wenn der vom Sauerstoffsensor 100 erfasste momentane Istwert den Sollwert überschreitet. Für den Fall, dass der Istwert gleich oder im Wesentlichen gleich dem Sollwert für die Sauerstoffsättigung ist, wird das Ventil 42 bis zur erneuten Zufuhr der unbeladenen ersten flüssigen Polymerkomponente 2A bevorzugt geschlossen.

Wie in Fig. 1 angedeutet ist, besitzt der Druckbehälter 4 einen in der Behälterwand 4a oder im Behälterdeckel 4c angeordneten Luft-Austrittskanal 60, der strömungsmäßig mit dem im Druckbehälter 4 oberhalb der flüssigen Polymerkomponente 2A befindlichen Luftvolumen kommuniziert, und der über ein Druckregulierventil 62 mit der Umgebung in Strömungsverbindung steht, welches öffnet, wenn der Druck im Inneren des Druckbehälters 4 einen vorgegebenen Maximaldruck übersteigt.

Das Druckregulierventil 62 ist bevorzugt ein pneumatisch steuerbares 3/2 Wegeventil, dessen Steuereingang 62I bevorzugt aus einer weiteren Druckluftquelle 64 mit einem vorgegebenen veränderbaren Steuerdruck beaufschlagbar ist. Die Strömungsverbindung zwischen dem Innenraum des Druckbehälters 4 und der Umgebung wird dabei durch das Druckregulierventil 62 freigegeben, wenn der Druck im Innenraum des Druckbehälters 4 den Steuerdruck übersteigt, der beispielsweise über ein nicht näher gezeigtes Nadelventil feinfühlig und bevorzugt mechanisch auf 4 bar eingestellt sein kann. Wie in Fig. 1 rein schematisch angedeutet ist, wird der Ventilkörper 63 im Druckregulierventil 62 durch den anliegenden Steuerdruck der weiteren Druckluftquelle 64 in den nicht näher bezeichneten Ventilsitz gedrängt, um den Austritt der Druckluft aus dem Innenraum des Druckbehälters 4 in den nachgeordneten Luft-Austrittskanal 60 und über diesen in die Umgebung zu verhindern.

Diese Ausführungsform der Erfindung besitzt den Vorteil, dass sich der Druck im Innenraum des Druckbehälters 4 in vorteilhafter Weise sehr feinfühlig auf einen vorgegebenen Wert einstellen lässt, ohne dass hierzu eine aufwendige elektronische Druckregeleinrichtung benötigt wird, die jedoch alternativ ebenfalls einsetzbar ist. Gleichzeitig wird sichergestellt, dass die während der zuvor erwähnten Zeitintervalle aus der Druckluftquelle 12 in den Druckbehälter 4 eingeleitete Druckluft, die z.B. einen Druck von 4,5 bar oder mehr aufweisen kann, beim Überschreiten des Steuerdrucks der weiteren Druckluftquelle 64 überhaupt aus dem Innenraum des Druckbehälters 4 austreten kann. Dies ist die Grundvoraussetzung für einen im Wesentlichen konstanten Luftstrom in der flüssigen Polymerkomponente 2A, der die Regelung auf einen vorgegebenen Sollwert für die Sauerstoffsättigung der flüssigen Polymerkomponente 2A erheblich erleichtert und die Regelgenauigkeit in vorteilhafter Weise erhöht.

Ein weiterer Vorteil der zuvor beschriebenen Ausführungsform der Erfindung ist darin zu sehen, dass das Druckregulierventil 62 sozusagen automatisch verschlossen wird, wenn der Druck im Druckbehälter 4 infolge der fortlaufend aus dem Luft-Austrittskanal 60 ausströmenden Luft, nach Schließen des Auf-/Zu-Ventils 42 der Druckluftquelle 12 den Steuerdruck unterschreitet, ohne dass hierfür ebenfalls keine zusätzlichen elektronisch angesteuerte Ventile oder sonstige Bauteile benötigt werden.

Nach einem weiteren der Erfindung zugrunde liegenden Gedanken ist in der Zirkulationsleitung 20 wenigstens ein in Fig. 1 gezeigter Drucksensor 28 angeordnet, der zur Kalibrierung des Sauerstoffsensors 100 den Druck der mit Luft beladenen flüssigen Polymerkomponente in der Zirkulationsleitung 20 erfasst. Hierdurch lässt sich der Sauerstoffsensor 100 mit hoher Genauigkeit kalibrieren und dadurch die Messgenauigkeit, mit der die Sauerstoffsättigung der flüssigen Polymerkomponente 2A bestimmt werden kann, insgesamt weiter erhöhen.

Bei der bevorzugten Ausführungsform der Erfindung sind der Drucksensor 28 und der Sauerstoffsensor 100 stromaufwärts der Pumpe 26, d.h. zwischen dem Ablauf 24 des Druckbehälters 4 und der Pumpe 26 in der Zirkulationsleitung 20 angeordnet. Hierdurch ergibt sich der Vorteil, dass Druckschwankungen in der Zirkulationsleitung 20, die durch eine Entnahme der flüssigen Polymerkomponente 2A in der Mischeinrichtung 40 verursacht werden, nicht, oder in erheblich reduziertem Maße Einfluss auf den Druck der flüssigen Polymerkomponente 2A bei der Bestimmung der Sauerstoffsättigung im Sauerstoffsensor 100 haben. Dies erlaubt es, den Istwert für die Sauerstoffsättigung der flüssigen Polymerkomponente 2A auch während einer Zufuhr der flüssigen Polymerkomponente 2A zur Mischeinrichtung 40 durch den Sauerstoff-Sensor mit hoher Genauigkeit zu erfassen, wodurch Qualitätsschwankungen im fertigen Schaumgemisch, welche sich durch einen zu hohen oder zu niedrigen Sauerstoffanteil in der flüssigen Polymerkomponente 2A ergeben, bereits frühzeitig entgegen gewirkt werden kann. Besonders bevorzugt ist der Drucksensor 28 in Höhe des Sauerstoffsensors 100 auf der diesem gegenüberliegenden Seite der Zirkulationsleitung 20 angeordnet. Gleichzeitig oder alternativ kann dieser stromabwärts der Pumpe/Dosierpumpe 26 angeordnet sein, wie dies in Fig. 1 ebenfalls schematisch angedeutet ist. Weiterhin kann es vorgesehen sein, wenn stromaufwärts des Sauerstoffsensors 100 ein Absperrhahn, bevorzugt ein mechanisch betätigter Kugelhahn, in der Zirkulationsleitung 20 angeordnet ist, mit welchem sich der Fluss der flüssigen Polymerkomponente 2A im Falle einer Störung, oder zur Außerbetriebnahme der Vorrichtung 1 von Hand unterbrechen lässt.

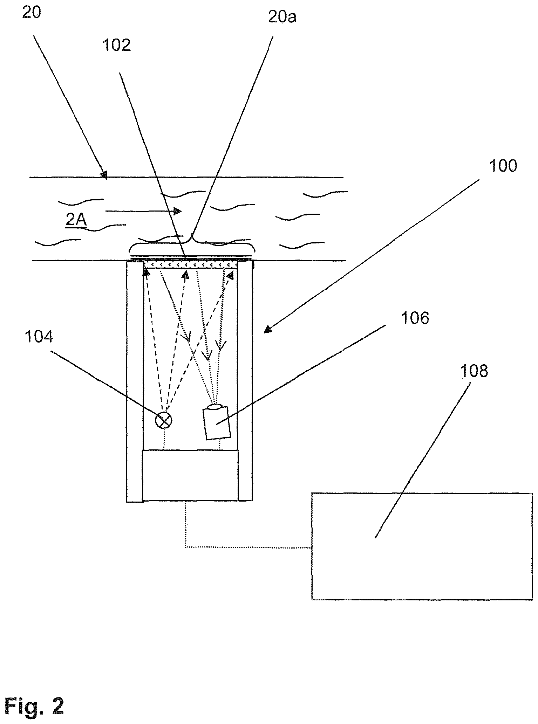

Bei der bevorzugten Ausführungsform der Erfindung besitzt der Sauerstoffsensor 100 eine fotosensitive Membran 102 mit einem darin enthaltenen Luminophor, welche einen Innenwandabschnitt 20a der Zirkulationsleitung 20 bildet, wie dies in Fig. 2 gezeigt ist. Die mit Luft beladene flüssige Polymerkomponente 2A tritt dabei direkt mit dem Luminophor in Kontakt, wenn diese durch die Zirkulationsleitung 20 strömt. Der Sauerstoffsensor 100 umfasst weiterhin eine Lichtquelle 104, z.B. eine LED, die die fotosensitive Membran 102 mit elektromagnetischer Strahlung, bevorzugt kurzwelligem blauen Licht, bestrahlt. Der Sauerstoffsensor 100 enthält weiterhin einen das von der bestrahlten Membran 102 emittierte Licht erfassenden optischen Sensor 106, der mit einer zugehörigen Sensorelektronik 108 verbunden ist, die aus dem vom optischen Sensor 106 erfassten Licht ein elektrisches Signal erzeugt, dessen Größe ein Maß für die Sättigung der flüssigen Polymerkomponente 2A mit dem darin enthaltenen Sauerstoff ist. Derartige Sauerstoffsensoren sind im Stand der Technik bekannt, beispielsweise aus der zuvor genannten EP 2 461 154 A1, und können im Handel als fertige Einheiten bezogen werden.

Um den Ist-Wert für die in der flüssigen Polymerkomponente 2A enthaltene Luftmenge als absoluten Wert zu bestimmen, ist die elektronische Steuerungs- und Regelungseinrichtung 50 in vorteilhafter Weise dazu eingerichtet, aus dem vom Sauerstoffsensor 100 und die mit diesem gekoppelte Sensorelektronik 108 ermittelten Ist-Wert für die Sauerstoffsättigung die in der flüssigen Polymerkomponente 2A enthaltene Luftmenge pro Volumeneinheit oder pro Masseneinheit der flüssigen Polymerkomponente 2A als absoluten Wert zu bestimmen. Dieser wird als Regelparameter dann in bekannter Weise einem elektronischen Regler, z.B. einem PID-Regler, zugeführt, der bevorzugt softwaremäßig in der elektronischen Steuerungs- und Regelungseinrichtung 50 implementiert ist. Hierzu ist die elektronische Steuerungs- und Regelungseinrichtung 50 dazu eingerichtet, die in der flüssigen Polymerkomponente 2A enthaltene Luftmenge pro Volumeneinheit und/oder pro Masseneinheit auf der Basis von zuvor empirisch durch Messungen ermittelten Werten für die Sauerstoffsättigung und die zugehörige, in der flüssigen Polymerkomponente 2A enthaltene Luftmenge zu bestimmen, die in einem Speicher 52 der elektronischen Steuerungs- und Regelungseinrichtung 50 ablegbar sind. Die Werte für die Sauerstoffsättigung und die Luftmenge pro Volumeneinheit/Masseneinheit werden zuvor bevorzugt auf der Basis von Kompressions- Dekompressionsmessungen bestimmt, wie sie z.B. in der EP 098 04 280 A1 oder der EP 0 451 752 A2 beschrieben sind, und als Wertepaare im Speicher 52 dauerhaft abgelegt.

### Liste der Bezugszeichen

- 1: Erfindungsgemäße Vorrichtung
- 2A: flüssige Polymerkomponente
- 2B: weitere Polymerkomponente
- 4: Druckbehälter
- 4a: Behälterwand

- 4b: Boden
- 4c: Behälterdeckel
- 6: Behälteröffnung
- 8: Rohrleitung
- 10: Luftaustrittsdüsen
- 12: Druckluftquelle
- 13: Motor
- 14: Rühreinrichtung
- 16: Durchflussmesser
- 20: Zirkulationsleitung
- 20a: Innenwandabschnitt
- 22: Zulauf
- 24: Ablauf
- 26: Pumpe
- 28: Drucksensor
- 30: Auslassventil
- 40: Mischeinrichtung
- 42: Auf-/Zu-Ventil
- 50: elektronische Steuerungs- und Regelungseinrichtung
- 52: Speicher der elektronischen Steuerungs- und Regelungseinrichtung
- 60: Luft-Austrittskanal
- 62: Druckregulierventil
- 62I: Steuereingang des Druckregulierventils
- 63: Ventilkörper
- 64: weitere Druckluftquelle
- 66: Luftauslass
- 100: Sauerstoffsensor
- 102: fotosensitive Membran
- 104: Lichtquelle
- 106: optischer Sensor
- 108: Sensorelektronik

## Patentansprüche

1. Vorrichtung (1) zur Bereitstellung einer flüssigen Polymerkomponente (2A) mit einem vorgegebenen Luftgehalt, insbesondere für die Herstellung eines Kunststoffschaums, umfassend
einen Druckbehälter (4), welchem die flüssige Polymerkomponente (2A) über eine Öffnung (6) zuführbar ist,
eine am Boden (4b) des Druckbehälters 4 angeordnete Rohrleitung (8), insbesondere Rohrschnecke, die eine Vielzahl von Luftaustrittsdüsen (10) aufweist, welchen Luft aus einer außerhalb des Druckbehälters (4) angeordneten Druckluftquelle (12) mit einem vorgegebenen Druck zum Austritt aus den Luftaustrittsdüsen (10) in den Innenraum des Druckbehälters (4) zuführbar ist, eine motorisch betätigte Rühreinrichtung (14), welche die flüssige Polymerkomponente (2A) mit der aus den Luftaustrittsdüsen (10) austretenden Luft vermischt,
eine Zirkulationsleitung (20) mit einem im Bereich des Bodens (4b) des Druckbehälters (4) angeordneten Zulauf (22) und einem oberhalb des Zulaufs (22) angeordneten Ablauf (24), eine
zwischen dem Zulauf (22) und dem Ablauf (24) angeordneten Pumpe (26), welche die mit Luft beladene Polymerkomponente (2) vom Zulauf (22) zum Ablauf (24) durch die Zirkulationsleitung (22) fördert, sowie ein zwischen der Pumpe (26) und dem Ablauf (24) angeordnetes Auslassventil (30), über welches die mit Luft beladene flüssige Polymerkomponente (2A) einer Mischeinrichtung (40) zur Vermischung mit einer weiteren Polymerkomponente (2B) zuführbar ist,
**dadurch gekennzeichnet, dass**
in der Zirkulationsleitung (20) ein Sauerstoffsensor (100) angeordnet ist, der einen Istwert für die Sauerstoffsättigung der mit Luft beladenen Polymerkomponente (2A) erfasst, und dass eine elektronische Steuerungs- und Regelungseinrichtung (50) vorgesehen ist, welche dazu eingerichtet ist, in Abhängigkeit von dem vom Sauerstoffsensor (100) erfassten Istwert für die Sauerstoffsättigung den Druck und/oder die Menge der den Luftaustrittsdüsen (10) zugeführten Druckluft zu verändern, derart, dass die Sauerstoffsättigung der in der Zirkulationsleitung (20) zirkulierten flüssigen Polymerkomponente (2A) einen vorgegebenen Sollwert annimmt.

2. Vorrichtung nach Anspruch 1,
**dadurch gekennzeichnet, dass**
die Druckluftquelle (12) über ein durch die elektronische Steuerungs- und Regelungseinrichtung (50) betätigbares Auf-/Zu-Ventil (42) strömungsmäßig mit der Rohrleitung (8) verbindbar ist, und dass die elektronische Steuerungs- und Regelungseinrichtung (50) das Auf-/Zu-Ventil (42) für eine vorgegebene Zeitdauer öffnet, wenn der vom Sauerstoffsensor (100) erfasste Istwert kleiner als der Sollwert für die Sauerstoffsättigung ist.

3. Vorrichtung nach einem der vorhergehenden Ansprüche,
**dadurch gekennzeichnet, dass**
in der Zirkulationsleitung (20) ein Drucksensor (28) angeordnet ist, welcher zur Kalibrierung des Sauerstoffsensors (100) den Druck der mit Luft beladenen flüssigen Polymerkomponente in der Zirkulationsleitung (20) erfasst.

4. Vorrichtung nach Anspruch 3,
**dadurch gekennzeichnet, dass**
der Drucksensor (28) und der Sauerstoffsensor (100) stromaufwärts des Druckbehälters (4) in der Leitung (20) angeordnet sind.

5. Vorrichtung nach einem der vorhergehenden Ansprüche,
**dadurch gekennzeichnet, dass**
der Druckbehälter (4) einen in der Behälterwand 4a oder im Behälterdeckel (4c) angeordneten Luft-Austrittskanal (60) besitzt, der strömungsmäßig mit einem im Druckbehälter (4) oberhalb der mit Luft beladenen flüssigen Polymerkomponente (2A) bereitgestellten Luftvolumen kommuniziert, und der über ein Druckregulierventil (62) mit der Umgebung in Strömungsverbindung steht, welches öffnet, wenn der Druck im Inneren des Druckbehälters (4) einen vorgegebenen Maximaldruck übersteigt.

6. Vorrichtung nach Anspruch 5,
**dadurch gekennzeichnet, dass**
das Druckregulierventil (62) ein pneumatisch steuerbares 3/2 Wegeventil ist, dessen Steuereingang (62I) aus einer Druckluftquelle (12) mit einem vorgegebenen veränderbaren Steuerdruck beaufschlagbar ist, wobei die Strömungsverbindung zwischen dem Innenraum des Druckbehälters (4) und der Umgebung durch das Druckregulierventil (62) freigegeben wird, wenn der Druck im Innenraum des Druckbehälters (4) den Steuerdruck übersteigt.

7. Vorrichtung nach einem der vorhergehenden Ansprüche,
**dadurch gekennzeichnet, dass**
der Sauerstoffsensor (100) eine fotosensitive Membran (102) mit einem darin enthaltenen Luminophor umfasst, welche einen Innenwandabschnitt (20a) der Zirkulationsleitung (20) bildet und welche mit der mit Luft beladenen flüssigen Polymerkomponente (2A) in Kontakt tritt, wenn diese durch die Zirkulationsleitung (20) strömt, und dass der Sauerstoffsensor (100) weiterhin eine die fotosensitive Membran (102) mit elektromagnetischer Strahlung bestrahlende Lichtquelle (104), sowie einen das von der bestrahlten Membran (102) emittierte Licht erfassenden optischen Sensor (106) und eine mit diesem gekoppelte Sensorelektronik (108) umfasst, welche aus dem vom optischen Sensor (106) erfassten Licht ein elektrisches Signal erzeugt, dessen Größe ein Maß für die Sättigung der flüssigen Polymerkomponente (2A) mit darin enthaltenem Sauerstoff ist.

8. Vorrichtung nach Anspruch 7,
**dadurch gekennzeichnet, dass**
die elektronische Steuerungs- und Regelungseinrichtung (50) dazu eingerichtet ist, aus dem ermittelten Wert für die Sauerstoffsättigung die in der flüssigen Polymerkomponente (2A) enthaltene Luftmenge pro Volumeneinheit oder pro Masseneinheit der flüssigen Polymerkomponente (2A) zu bestimmen.

9. Vorrichtung nach Anspruch 8,
**dadurch gekennzeichnet, dass**
die elektronische Steuerungs- und Regelungseinrichtung (50) dazu eingerichtet ist, die in der flüssigen Polymerkomponente (2A) enthaltene Luftmenge pro Volumeneinheit und/oder pro Masseneinheit auf der Basis von zuvor empirisch durch Messungen ermittelten Werten für die Sauerstoffsättigung und die zugehörige, in der flüssigen Polymerkomponente (2A) enthaltene Luftmenge zu bestimmen, die in einem Speicher (52) der elektronischen Steuerungs- und Regelungseinrichtung (50) ablegbar sind.

## Claims

1. An apparatus (1) for providing a liquid polymer component (2A) having a predefined air content, in particular for producing a plastic foam, comprising
a pressure vessel (4), to which the liquid polymer component (2A) can be fed through an opening (6),
a pipeline (8), in particular tubular screw conveyor, which is arranged on the bottom (4b) of the pressure vessel (4) and has a multiplicity of air outlet nozzles (10), to which air from a compressed-air source (12) arranged outside the pressure vessel (4) can be fed at a predefined pressure in order to exit the air outlet nozzles (10) into the interior space of the pressure vessel (4),
a motor-operated stirring device (14), which mixes the liquid polymer component (2A) with the air exiting the air outlet nozzles (10),
a circulation line (20) having an inflow (22) arranged in the region of the bottom (4b) of the pressure vessel (4) and an outflow (24) arranged above the inflow (22),
a pump (26), which is arranged between the inflow (22) and the outflow (24) and conveys the air-charged polymer component (2) through the circulation line (22) from the inflow (22) to the outflow (24), and an outlet valve (30), which is arranged between the pump (26) and the outflow (24) and which makes it possible to feed the air-charged liquid polymer component (2A) to a mixing device (40) for mixing with a further polymer component (2B),
**characterized in that**
an oxygen sensor (100) is arranged in the circulation line (20) and measures an actual value for the oxygen saturation of the air-charged polymer component (2A), and **in that** an electronic control device (50) is provided, which is configured to modify the pressure and/or the amount of compressed air fed to the air outlet nozzles (10) on the basis of the actual value for the oxygen saturation measured by the oxygen sensor (100), in such a way that the oxygen saturation of the liquid polymer component (2A) circulating in the circulation line (20) assumes a predefined setpoint value.

2. The apparatus as claimed in claim 1,
**characterized in that**
the compressed-air source (12) can be fluidically connected to the pipeline (8) via an open-close valve (42), which can be actuated by the electronic control device (50), and **in that** the electronic control device (50) opens the open-close valve (42) for a predefined period of time if the actual value measured by the oxygen sensor (100) is less than the setpoint value for the oxygen saturation.

3. The apparatus as claimed in either of the preceding claims,
**characterized in that**
a pressure sensor (28) is arranged in the circulation line (20) and measures the pressure of the air-charged liquid polymer component in the circulation line (20) to calibrate the oxygen sensor (100).

4. The apparatus as claimed in claim 3,
**characterized in that**
the pressure sensor (28) and the oxygen sensor (100) are arranged upstream of the pressure vessel (4) in the line (20).

5. The apparatus as claimed in one of the preceding claims,
**characterized in that**
the pressure vessel (4) has an air outlet channel (60), which is arranged in the vessel wall (4a) or in the vessel cover (4c), fluidically communicates with an air volume provided in the pressure vessel (4) above the air-charged liquid polymer component (2A), and is fluidically connected to the surrounding area via a pressure regulating valve (62) which opens if the pressure inside the pressure vessel (4) exceeds a predefined maximum pressure.

6. The apparatus as claimed in claim 5,
**characterized in that**
the pressure regulating valve (62) is a pneumatically controllable 3/2-way valve, to the control input (62I) of which a predefined variable control pressure from a compressed-air source (12) can be applied, wherein the fluidic connection between the interior space of the pressure vessel (4) and the surroundings is opened up by the pressure regulating valve (62) if the pressure in the interior space of the pressure vessel (4) exceeds the control pressure.

7. The apparatus as claimed in one of the preceding claims,
**characterized in that**
the oxygen sensor (100) comprises a photosensitive membrane (102) containing a luminous phosphor, which forms an inner wall portion (20a) of the circulation line (20) and comes into contact with the air-charged liquid polymer component (2A) when the latter flows through the circulation line (20), and **in that** the oxygen sensor (100) also comprises a light source (104) which can irradiate the photosensitive membrane (102) with electromagnetic radiation, and also an optical sensor (106) that detects light emitted by the irradiated membrane (102) and sensor electronics (108), which are coupled to the optical sensor and generate an electrical signal, the value of which is a measure for the oxygen saturation of the liquid polymer component (2A), from the light detected by the optical sensor (106).

8. The apparatus as claimed in claim 7,
**characterized in that**
the electronic control device (50) is configured to determine the amount of air present in the liquid polymer component (2A) per unit volume or per unit mass of the liquid polymer component (2A) from the value ascertained for the oxygen saturation.

9. The apparatus as claimed in claim 8,
**characterized in that**
the electronic control device (50) is configured to determine the amount of air present in the liquid polymer component (2A) per unit volume and/or per unit mass on the basis of values for the oxygen saturation and the associated amount of air present in the liquid polymer component (2A) that were ascertained empirically by measurements beforehand, and which are storable in a memory (52) of the electronic control device (50).

## Revendications

1. Dispositif (1) pour fournir un composant polymère liquide (2A) avec une teneur en air prédéfinie, en particulier pour la fabrication d'une mousse plastique, comprenant
un récipient sous pression (4), dans lequel le composant polymère liquide (2A) est apte à être introduit par une ouverture (6),
une conduite (8), en particulier une vis sans fin, agencée au fond (4b) du récipient sous pression (4) et comportant une pluralité de buses (10) de sortie d'air, qui est apte à être alimenté en air à une pression prédéfinie provenant d'une source (12) d'air comprimé située à l'extérieur du récipient sous pression (4) pour sortir par les buses (10) de sortie d'air et pénétrer dans l'espace intérieur du récipient sous pression (4), un dispositif d'agitation (14) actionné par un moteur qui mélange le composant polymère liquide (2A) avec l'air sortant des buses (10) de sortie d'air,
une conduite de circulation (20), avec une arrivée (22) agencée dans la zone du fond (4b) du récipient sous pression (4) et une évacuation (24) agencée au-dessus de l'arrivée (22),
Une pompe (26), agencée entre l'arrivée (22) et l'évacuation (24), qui transporte le composant polymère (2) chargé d'air depuis l'arrivée (22) jusqu'à l'évacuation (24) à travers la conduite de circulation (22), ainsi qu'une vanne de sortie (30) agencée entre la pompe (26) et l'évacuation (24), par laquelle le composant polymère liquide chargé d'air (2A) est apte à être acheminé vers un dispositif de mélange (40) pour être mélangé avec un autre composant polymère (2B), **caractérisé en ce que**
un capteur d'oxygène (100) est agencé dans la conduite de circulation (20), lequel capteur enregistre une valeur réelle pour la saturation en oxygène du composant polymère chargé d'air (2A), et **en ce qu'**un dispositif (50) de commande et de régulation électronique est prévu, lequel est conçu pour, en fonction de la valeur réelle de la saturation en oxygène enregistrée par le capteur d'oxygène (100), modifier la pression et/ou la quantité d'air comprimé alimentant les buses (10) de sortie d'air, de telle sorte que la saturation en oxygène du composant polymère liquide (2A) circulant dans la conduite de circulation (20) prenne une valeur de consigne prédéfinie.

2. Dispositif selon la revendication 1,
**caractérisé en ce que**
la source (12) d'air comprimé est apte à être reliée à la conduite (8) de façon permettant un écoulement, par l'intermédiaire d'une vanne d'ouverture/fermeture (42) apte à être actionnée par le dispositif (50) de commande et de régulation électronique, et **en ce que** le dispositif (50) de commande et de régulation électronique ouvre la vanne d'ouverture/fermeture (42) pendant une durée prédéfinie lorsque la valeur réelle détectée par le capteur d'oxygène (100) est inférieure à la valeur de consigne pour la saturation en oxygène.

3. Dispositif selon l'une des revendications précédentes,
**caractérisé en ce que**
un capteur de pression (28) est agencé dans la conduite de circulation (20), lequel capteur détecte la pression du composant polymère liquide chargé d'air dans la conduite de circulation (20) dans le but d'étalonner le capteur d'oxygène (100).

4. Dispositif selon la revendication 3,
**caractérisé en ce que**
le capteur de pression (28) et le capteur d'oxygène (100) sont agencés en amont du récipient sous pression (4) dans la conduite (20).

5. Dispositif selon l'une des revendications précédentes,
**caractérisé en ce que**
le récipient sous pression (4) présente un conduit de sortie d'air (60) agencé dans la paroi (4a) du récipient ou dans le couvercle (4c) du récipient, qui communique, de façon permettant un écoulement, avec un volume d'air prévu dans le récipient sous pression (4) au-dessus du composant polymère liquide (2A) chargé d'air, et qui est en communication fluidique avec l'environnement par l'intermédiaire d'une vanne (62) de régulation de pression, qui s'ouvre lorsque la pression à l'intérieur du récipient sous pression (4) dépasse une pression maximale prédéterminée.

6. Dispositif selon la revendication 5,
**caractérisé en ce que**
la vanne (62) de régulation de pression est une vanne à 3/2 voies à commande pneumatique dont l'entrée de commande (62I) est apte à être alimentée par une source (12) d'air comprimé avec une pression de commande variable prédéfinie, la liaison fluidique entre l'intérieur du récipient sous pression (4) et l'environnement étant libérée par la vanne (62) de régulation de pression lorsque la pression à l'intérieur du récipient sous pression (4) dépasse la pression de commande.

7. Dispositif selon l'une des revendications précédentes,
**caractérisé en ce que**
le capteur d'oxygène (100) comprend une membrane photosensible (102) contenant un luminophore, qui forme une partie de paroi intérieure (20a) de la conduite de circulation (20) et qui entre en contact avec le composant polymère liquide (2A) chargé d'air lorsque celui-ci s'écoule à travers la conduite de circulation (20), et **en ce que** le capteur d'oxygène (100) comprend en outre une source lumineuse (104) qui irradie la membrane photosensible (102) avec un rayonnement électromagnétique, ainsi qu'un capteur optique (106) qui détecte la lumière émise par la membrane irradiée (102) et un système électronique de détection (108) relié à ce capteur, qui, à partir de la lumière captée par le capteur optique (106), génère un signal électrique dont l'amplitude est une mesure de la saturation du composant polymère liquide (2A) avec l'oxygène qu'il contient.

8. Dispositif selon la revendication 7,
**caractérisé en ce que**
le dispositif (50) de commande et de régulation électronique est conçu pour déterminer, à partir de la valeur déterminée pour la saturation en oxygène, la quantité d'air contenue dans le composant polymère liquide (2A) par unité de volume ou par unité de masse du composant polymère liquide (2A).

9. Dispositif selon la revendication 8,
**caractérisé en ce que**
le dispositif (50) de commande et de régulation électronique est conçu pour déterminer la quantité d'air contenue dans le composant polymère liquide (2A) par unité de volume et/ou par unité de masse sur la base de valeurs de saturation en oxygène déterminées empiriquement au préalable par des mesures et de la quantité d'air correspondante contenue dans le composant polymère liquide (2A), qui sont aptes à être stockées dans une mémoire (52) du dispositif (50) de commande et de régulation électronique.
